# EUROPÄISCHE PATENTSCHRIFT

(11) **EP 1 586 754 B1**
(45) Veröffentlichungstag und Bekanntmachung des Hinweises auf die Patenterteilung: **29.04.2009**
(21) Anmeldenummer: 05007080.4
(22) Anmeldetag: 31.03.2005
(51) Int. Cl.: F01P 7/16, B60T 1/08

(54) **Kühlsystem**
Cooling system
Système de refroidissement

(30) Priorität: 15.04.2004 DE 102004018227
(43) Veröffentlichungstag der Anmeldung: 19.10.2005
(73) Patentinhaber: ZF Friedrichshafen AG, 88038 Friedrichshafen (DE)
(72) Erfinder: Kellner, Matthias, 88263 Horgenzell (DE)

(56) Entgegenhaltungen:
- WO-A-95/01500
- DE-A- 19 641 558
- DE-A- 19 854 389
- US-A- 5 657 838

## Beschreibung

Die vorliegende Erfindung betrifft ein Kühlsystem für ein Kraftfahrzeug, umfassend einen Retarder gemäß dem Oberbegriff des Patentanspruchs 1.

Aus dem Stand der Technik ist die Verwendung von verschleißfreien Bremsen, insbesondere Retardern und im Getriebegehäuse angeordneten "Intardern" bekannt, um den hohen Anforderungen an die Bremsleistung zu genügen, wobei üblicherweise eine Hydraulikflüssigkeit als Bremsmedium dient. Hierbei entsteht der Nachteil, dass sich durch die Abfuhr der Bremsleistung auch das Getriebeöl erhitzt. Daher entsteht ein Regelungsbedarf der Temperatur des Getriebeöls.

Aus der DE 198 54 389 A1 der Anmelderin ist ein Kühlsystem für den Antrieb von Kraftfahrzeugen mit einem Retarder bekannt, welches die durch den Betrieb des Retarders erzeugte Wärme im Ölkreis des Getriebes mit dem Ölstrom zu einem vorgesehenen Wärmetauscher transportiert, um diese an den Kühlkreislauf des Motors abzugeben. Hierbei kann es Situationen geben, beispielsweise bei Dauerbetrieb des Retarders, bei denen ein Wärmetauscher nicht ausreicht, um die gewünschte Kühlwirkung zu erzielen.

Im Rahmen der DE 101 38 704 A1 der Anmelderin wird ein weiteres Kühlsystem vorgestellt, welches einen ersten Kühlkreis aufweist, umfassend eine Abfuhrleitung, die den Motor mit einem Radiator verbindet und wenigstens einen in der Abfuhrleitung angeordneten Wärmetauscher, wobei der Wärmetauscher einen zweiten Kühlkreis, bestehend aus einem Getriebe und/oder Retarder versorgt. Hierbei ist der zweite Kühlkreis in wenigstens zwei Teilkühlkreise unterteilt, welche im Bedarfsfall, beispielsweise bei Retarderbetrieb oder Zug- und Schubbetrieb des Getriebes, kombiniert oder getrennt eingesetzt werden. Zudem kann ein zweiter Radiator vorgesehen sein, um die Kühlwirkung zu erhöhen.

Aus der DE 3713580 C1 ist eine Antriebsanlage mit einem hydrodynamischen Primärretarder bekannt, die aus einem Antriebsmotor und einem Kühlsystem besteht, bei der der hydrodynamische Retarder mit der Kurbelwelle in dauernder Drehverbindung ist und durch das Kühlmittel (Kühlwasser) selbst betrieben wird. Hierbei übernimmt der Retarder auch im ungebremsten Zustand die Funktion einer Kühlmittelumwälzpumpe; der Retarderbetrieb erfolgt durch Umschaltung einer Ventilkombination zwischen Retarder und Motor. Für den Fall einer Anhebung der Betriebstemperatur des Motors muss bei dieser Konstruktion auch das Getriebe für höhere Temperaturen ausgelegt werden.

Die Betriebstemperaturen der Antriebsmotoren wurden in den vergangenen Jahren aus verschiedenen Gründen angehoben, wobei die Motorbetriebstemperatur über das Motorthermostatventil geregelt wird. Hierbei kann ein Getriebe mit einem Wasser-Öl-Getriebewärmetauscher die speziell im Retarderbetrieb anfallende Wärme nur an den Wasser-Kühlerkreislauf abgeben.

Bei einem einfachen Kühlkreislauf gibt die Motorbetriebstemperatur die Mindesttemperatur des Getriebes vor. In einem einfachen Getriebekühlkreislauf bestimmt somit die Motorbetriebstemperatur die Wärmeauslegung des Getriebes. Hierbei kann das Getriebe über den Wasser-Öl-Getriebewärmetauscher Wärme nur bei Vorhandensein einer Temperaturdifferenz Öl zu Wasser abgeben, wobei die maximale Kühlwassertemperatur von der Siedetemperatur des unter Druck stehenden Kühlwassers vorgegeben ist. Dies bedeutet, dass im Retarderbetrieb die momentan entstehende Wärme nur mit dem Kühlwasservolumenstrom und der maximalen Temperaturdifferenz Kühlwassersiedetemperatur zu Motorbetriebstemperatur abgegeben werden kann. Steigt die Motorbetriebstemperatur bei Beibehaltung des Kühlwasserdrucks (d. h. keine Erhöhung der Siedetemperatur), wird die maximal momentan abführbare Wärmemenge verringert. Damit kann der Einsatz eines Retarders/Intarders im Getriebe bei weiteren Motortemperaturerhöhungen unmöglich werden. Ein weiteres Problem besteht darin, dass eine Auslegung des Getriebes für höhere Temperaturen erfolgen muss. Ferner wird bei den bestehenden Kühlsystemen die im Zugbetrieb zur Verfügung stehende maximale Kühlleistung des Radiators durch das Schließen des Thermostaten nicht voll genutzt.

Nach dem Stand der Technik ist der Radiator eines Kühlsystems derart ausgelegt, dass er im Retarderbetrieb bei regelndem Kühlsystem für den Fall eines momentanen Leistungsanfalls die Kühlwassertemperatur unterhalb der Kühlwassersiedetemperatur halten und den mittleren Wärmeeintrag bei bestimmten Abnahmebedingungen (z. B. Retarderzyklen) abführen kann.

In der Praxis kann der Fall eintreten, dass die Kühlleistung im nicht regelnden Kühlsystem für die Kühlung ausreicht und das Getriebe im regelnden System zu heiß wird, so dass ein Zusatzkühler erforderlich wird. Dies bedeutet, dass der Radiator, der Lüfter und die Pumpleistung der Motorkühlmittelpumpe zur Kühlung des Fahrzeuges ausreichen, wobei durch den Thermostaten die maximale Leistungsabfuhr verhindert wird.

Aus der WO 95/01500 ist dazu ein Kühlsystem für den Antrieb von Fahrzeugen, die einen Retarder aufweisen, bekannt, das zwei Kühlkreisläufe umfasst, die Wärme an einen gemeinsam genutzten Radiator/Kühler abgeben. Durch den ersten Kühlkreislauf wird der Motor und durch den zweiten parallelen Kühlkreislauf der Retarder gekühlt. Die Retarderkühlung ist von der Motortemperatur unabhängig.

Der vorliegenden Erfindung liegt die Aufgabe zugrunde, ein Kühlsystem für den Antrieb von Fahrzeugen, die einen Retarder aufweisen, anzugeben und die konstruktive Ausgestaltung des Kühlsystems zu vereinfachen.

Diese Aufgabe wird durch die Merkmale des Patentanspruchs 1 gelöst. Weitere Ausgestaltungen und Vorteile gehen aus den Unteransprüchen hervor.

Demnach wird ein Kühlsystem vorgeschlagen, bei dem der Retarder/Intarder einen zum Motorkühlkreislauf parallelen Kühlkreislauf aufweist, derart, dass die Retarderkühlung unabhängig von der Motortemperatur ist. Hierbei wird die Wärme beider Kühlkreisläufe über denselben Radiator/Fahrzeugkühler abgeführt.

Gemäß der Erfindung wird ein Retarder/Intarder so konstruiert, dass er gleichzeitig als Pumpe wirkt und somit die durch die Bremsleistung in das Medium des Retarders eingebrachte Energie abtransportieren kann. Hierbei wird vom Retarder/Intarder nur im Retarderbetrieb ein großer Volumenstrom über den Radiator geleitet. Vorzugsweise kann der Retarder als regelbare Pumpe ausgebildet sein, so dass die Betriebstemperatur geregelt werden kann.

Im Rahmen einer besonders vorteilhaften Ausführungsform wird vorgeschlagen, einen Retarder/Intarder zu verwenden, dessen Arbeitsmedium die Kühlflüssigkeit (Kühlwasser) des Kühlsystems ist, und diesen direkt mit dem Radiator/Kühler zu verbinden, so dass die erhitzte Kühlflüssigkeit direkt zum Radiator/Kühler gepumpt wird, wobei als Kühler der vorhandene Fahrzeugkühler verwendet wird.

Durch die erfindungsgemäße Konzeption ist der Motor durch die ohnehin vorhandene Kühlwasserpumpe vom Retarderkühlkreislauf losgelöst und somit bei beliebigen Motortemperaturen betreibbar. Die Regelung der Motortemperatur bleibt hierbei alleine dem Motorhersteller mit der Wahl des Thermostaten vorbehalten. Ferner kann vom Retarder im Retarderbetrieb die gesamte Wärmekapazität der vorhandenen Kühlwassermenge sowie die Kühlkapazität des Radiators/Fahrzeugkühlers genutzt werden, wobei ein zusätzlicher Öl-Wasser-Wärmetauscher für den Retarder in vorteilhafter Weise vermieden wird. Die Regelung der Motortemperatur kann gemäß der Erfindung ohne Thermostaten über die Kühlwasserpumpe erfolgen, wenn diese als regelbare Pumpe ausgebildet ist.

Eine vorteilhafte Weiterbildung der Erfindung sieht vor, dass neben der Retarderkühlung auch die Getriebekühlung unabhängig von der Motortemperatur ist. Dies wird dadurch erreicht, dass der Getriebewärmetauscher (Öl-Wasser Wärmetauscher) die Wärme an den Kühlkreislauf des Retarders abgibt. Zu diesem Zweck ist der Getriebewärmetauscher am Kühlkreislauf des Retarders an der Eintrittsseite des Retarders angeordnet, wobei der Retarder in diesem Fall derart ausgelegt ist, dass er auch im Zugbetrieb einen Volumenstrom erzeugt.

Das Getriebe kann gemäß der Erfindung in vorteilhafter Weise bei wesentlich niedrigeren Temperaturen, als es nach dem Stand der Technik üblich ist, betrieben werden. Dies bedeutet, dass das Getriebeöl aufgrund der geringeren Erwärmung einer geringeren Ölalterung ausgesetzt ist, was sich auf die Dauerfestigkeit positiv auswirkt.

Ferner kann das gesamte Kühlwasser als Speichermedium für die Dämpfung von Wärmeleistungsspitzen verwendet werden; hierbei kann die hohe Wärmekapazität des Wassers zur schnellen Wärmeabfuhr genutzt werden. Theoretisch ist eine Abkühlung des Getriebes im Re-/Intarderbetrieb ebenfalls möglich.

Ein weiterer Vorteil des erfindungsgemäßen Kühlsystems besteht darin, dass keine zusätzlichen aktiven Komponenten wie z.B. Pumpen benötigt werden, was zu einer Kosten und Komplexitätsreduzierung führt.

Gemäß der Erfindung kann der Fahrzeugkühler/Radiator derart ausgelegt sein, dass bei jedem Re-/Intarderbetriebspunkt sämtliche anfallenden Bremsleistungen abführbar sind, um eine Erwärmung des Getriebes im Retarderbetrieb zu vermeiden.

Im Rahmen einer weiteren Ausführungsform kann der Retarder/Intarder (dessen Arbeitsmedium die Kühlflüssigkeit ist) in den bestehenden Kühlkreislauf integriert werden, ohne direkt mit dem Radiator verbunden zu sein.

Die Erfindung wird im Folgenden anhand der beigefügten Figuren beispielhaft näher erläutert. Es stellen dar:
- Fig. 1: eine schematische Ansicht des Aufbaus eines Kühlsystems gemäß einer ersten bevorzugten Ausführungsform der Erfindung, bei der die Retarderkühlung unabhängig von der Motorkühlung ist; und
- Fig. 2: eine schematische Ansicht des Aufbaus eines Kühlsystems gemäß einer zweiten bevorzugten Ausführungsform der Erfindung, bei der die Retarderkühlung und die Getriebekühlung unabhängig von der Motorkühlung sind.

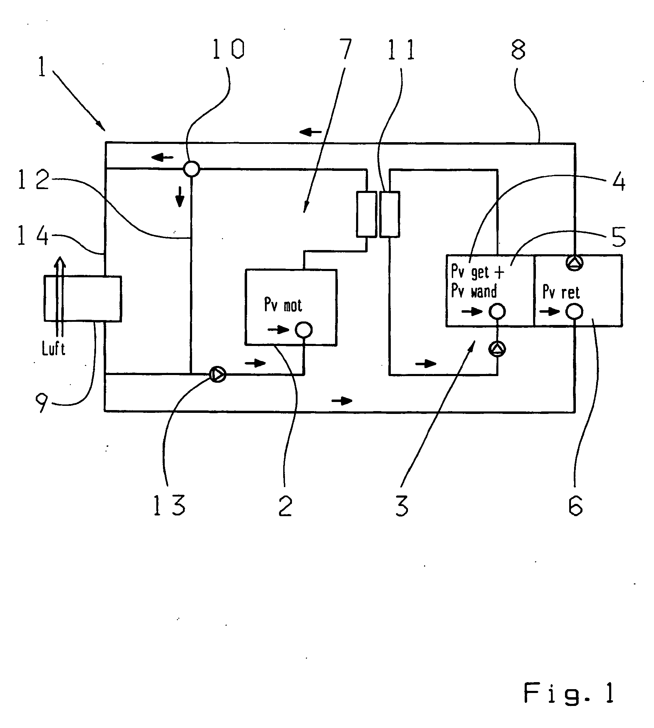

In Fig. 1 bezeichnet 1 das Kühlsystem, 2 den Antriebsmotor und 3 eine Einheit bestehend aus dem Getriebe 4 und dem Wandler 5. Ferner wird die Verlustleistung des Getriebes mit Pv_get und die Verlustleistung des Wandlers mit Pv_wand bezeichnet; die Bremsleistung des Retarders/lntarders 6 wird mit Pv_ret bezeichnet. Die Pfeile veranschaulichen die Flussrichtung des Kühlmittels bzw. des Getriebeöls.

Gemäß der Erfindung umfasst das Kühlsystem 1 zwei Kühlkreisläufe 7, 8, die die Wärme an einen gemeinsam genutzten Radiator/Fahrzeugkühler 9 abgeben, wobei durch den ersten Kühlkreislauf 7 der Motor 2, das Getriebe 4 und der Wandler 5 und durch den zweiten parallelen Kühlkreislauf 8 der Retarder 6 gekühlt wird.

Im Rahmen der in Fig. 1 gezeigten Ausführungsform des erfindungsgemäßen Kühlsystems 1 ist der Retarder/Intarder 6 so konstruiert, dass er gleichzeitig als Pumpe wirkt und somit die durch die Bremsleistung in das Medium des Retarders/lntarders 6 eingebrachte Energie abtransportieren kann. Ferner ist vorgesehen, dass als Arbeitsmedium des Retarders/Intarders 6 die Kühlflüssigkeit (Kühlwasser) des Kühlsystems 1 dient, wodurch der Retarder 6 mit dem Radiator 9 direkt verbindbar ist, so dass die erhitzte Kühlflüssigkeit direkt zum Radiator 9 gepumpt wird.

In dem gezeigten Beispiel ist ein Wasser-Öl-Wärmetauscher 11 vorgesehen, mittels dessen im Getriebe erzeugte Wärme an den Motorkühlkreislauf 7 abgegeben wird.

Durch diese Konstruktion wird erreicht, dass die Retarderkühlung unabhängig von der Motortemperatur ist, welche von einem Thermostaten 10 geregelt wird. Wenn die Motortemperatur unterhalb der Betriebstemperatur liegt, wird die Kühlflüssigkeit im Motorkühlkreislauf 7 nicht dem Radiator 9, sondern über die Leitung 12 und die Motorkühlwasserpumpe 13 wieder dem Motor 2 zugeführt. Bei erreichter Betriebstemperatur fließt die Kühlflüssigkeit über die Leitung 14 durch den Radiator 9 und wird anschließend mittels der Motorkühlwasserpumpe 13 dem Motor 2 zugeführt.

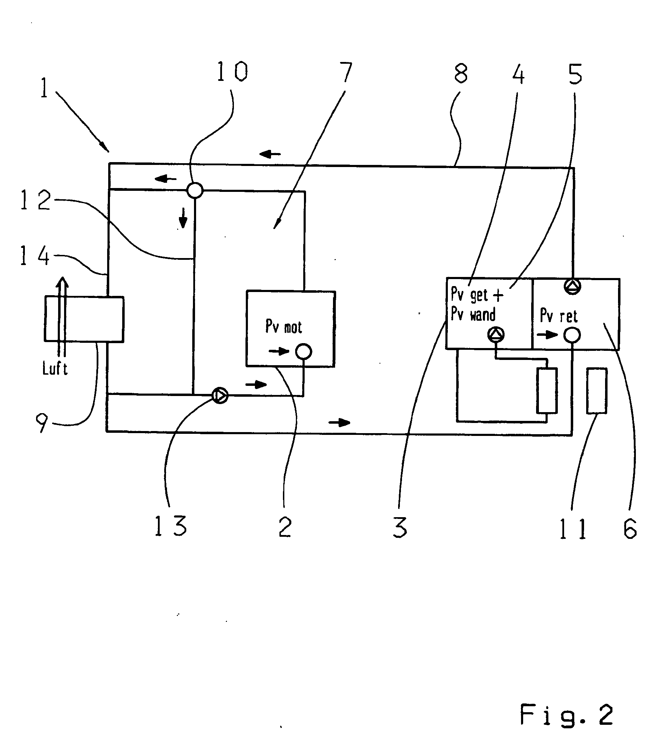

Bei dem in Fig. 2 gezeigten Ausführungsbeispiel (gleiche Bezugszeichen bezeichnen gleiche Bauteile) werden das Getriebe 4 und der Wandler 5 durch den Kühlkreislauf 8 des Retarders 6 gekühlt. Der Unterschied zu dem Ausführungsbeispiel aus Fig. 1 besteht darin, dass die Getriebewärme über den Getriebewärmetauscher 11 an die Kühlflüssigkeit des Retarders abgegeben wird. Der Getriebewärmetauscher 11 ist hierbei am Kühlkreislauf des Retarders an der Eintrittsseite des Retarders angeordnet, wobei der Retarder in diesem Fall vorzugsweise derart ausgelegt ist, dass er auch im Zugbetrieb einen regelbaren Volumenstrom erzeugt, um das Kühlmittel umzuwälzen.

Durch die mittels der erfindungsgemäßen Konzeption nach Fig. 2 realisierbare Unabhängigkeit der Kühlung von Motor und Getriebe wird eine Auslegung der Motoren für höhere Temperaturen ermöglicht, ohne die Lebensdauer und die optimale Kühlung von Getrieben, die einen Retarder umfassen, zu beeinflussen.

Selbstverständlich fällt auch jede konstruktive Ausbildung, insbesondere jede räumliche Anordnung der Kühlsystem- bzw. Kühlkreiselement , an sich sowie zueinander und soweit technisch sinnvoll, unter den Schutzumfang der vorliegenden Ansprüche, ohne die Funktion des Kühlsystems, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Kühlsystem
- 2: Motor
- 3: Einheit aus Getriebe und Wandler
- 4: Getriebe
- 5: Wandler
- 6: Retarder/Intarder
- 7: Kühlkreislauf
- 8: Kühlkreislauf
- 9: Radiator/Kühler
- 10: Thermostat
- 11: Getriebewärmetauscher
- 12: Leitung
- 13: Kühlwasserpumpe
- 14: Leitung

## Patentansprüche

1. Kühlsystem für den Antrieb von Fahrzeugen, die einen Retarder aufweisen, das zwei Kühlkreisläufe (7, 8) umfasst, die Wärme an einen gemeinsam genutzten Radiator/Kühler (9) abgeben, wobei durch den ersten Kühlkreislauf (7) der Motor (2) und durch den zweiten parallelen Kühlkreislauf (8) der Retarder (6) gekühlt wird und die Retarderkühlung unabhängig von der Motor-temperatur ist, **dadurch gekennzeichnet, dass** der Retarder (6) derart konstruiert ist, dass er als Pumpe für den zweiten Kühlkreislauf (8) dient.

2. Kühlsystem nach Anspruch 1, **dadurch gekennzeichnet, dass** der Retarder (6) derart konstruiert ist, dass dessen Arbeitsmedium die Kühlflüssigkeit (Kühlwasser) des Kühlsystems (1) ist, wobei der Retarder (6) direkt mit dem Radiator/Kühler (9) verbunden ist, so dass die erhitzte Kühlflüssigkeit direkt zum Radiator/Kühler (9) gepumpt wird.

3. Kühlsystem nach Anspruch 1 oder 2, **dadurch gekennzeichnet, dass** als Radiator/Kühler (9) der vorhandene Fahrzeugkühler verwendet wird.

4. Kühlsystem nach einem der vorangehenden Ansprüche, **dadurch gekennzeichnet, dass** der Retarder/Intarder (6) nur im Retarderbetrieb einen großen Volumenstrom über den Radiator/Kühler (9) leitet.

5. Kühlsystem nach einem der vorangehenden Ansprüche, **dadurch gekennzeichnet, dass** das Getriebe (4) über einen Getriebewärmetauscher (11) Wärme an den Kühlkreislauf (7) des Motors abgeben kann.

6. Kühlsystem nach einem der Ansprüche 1 bis 3, **dadurch gekennzeichnet, dass** durch den zweiten parallelen Kühlkreislauf (8) der Retarder (6) und das Getriebe (4) gekühlt werden, so dass die Retarderkühlung und die Getriebekühlung unabhängig von der Motortemperatur sind.

7. Kühlsystem nach Anspruch 6, **dadurch gekennzeichnet, dass** das Getriebe über den Getriebewärmetauscher (11) Getriebewärme an den zweiten Kreislauf (8) abgibt, wobei der Getriebewärmetauscher (11) an der Eintrittsseite des Retarders (6) angeordnet ist.

8. Kühlsystem nach Anspruch 6 oder 7, **dadurch gekennzeichnet, dass** der Retarder (6) derart ausgelegt ist, dass er auch im Zugbetrieb einen regelbaren Volumenstrom erzeugt, um das Kühlmittel des zweiten Kreislaufs (8) umzuwälzen.

9. Kühlsystem nach einem der vorangehenden Ansprüche, **dadurch gekennzeichnet, dass** der Motor (2) durch die im Kühlkreislauf (7) vorhandene Kühlwasserpumpe (13) vom Kühlkreislauf (8) unabhängig und bei beliebigen Motortemperaturen betreibbar ist, wobei die Regelung der Motortemperatur über den im Kühlkreislauf (7) enthaltenen Thermostaten (10) erfolgt, welcher ab Erreichen der Betriebstemperatur den Kreislauf (7) mit dem Radiator/Kühler (9) verbindet.

10. Kühlsystem nach einem der Ansprüche 1 bis 8, **dadurch gekennzeichnet, dass** der Motor (2) durch die im Kühlkreislauf (7) vorhandene Kühlwasserpumpe (13) vom Kühlkreislauf (8) unabhängig und bei beliebigen Motortemperaturen betreibbar ist, wobei die Regelung der Motortemperatur über die Kühlwasserpumpe (13) erfolgt, welche regelbar ausgebildet ist.

11. Kühlsystem nach einem der vorangehenden Ansprüche, **dadurch gekennzeichnet, dass** der Radiator/Kühler (9) derart ausgelegt ist, dass bei jedem Re-/Intarderbetriebspunkt sämtliche anfallenden Bremsleistungen abführbar sind, um eine Erwärmung des Getriebes (4) im Retarderbetrieb zu vermeiden.

## Claims

1. Cooling system for the drive of vehicles which have a retarder, which cooling system comprises two cooling circuits (7, 8) which dissipate heat to a commonly utilized radiator/cooler (9), with the engine (2) being cooled by means of the first cooling circuit (7) and the retarder (6) being cooled by means of the second, parallel cooling circuit (8), and with the cooling of the retarder being independent of the engine temperature, **characterized in that** the retarder (6) is designed so as to serve as a pump for the second cooling circuit (8).

2. Cooling system according to Claim 1, **characterized in that** the retarder (6) is designed such that the working medium of said retarder (6) is the cooling liquid (cooling water) of the cooling system (1), with the retarder (6) being directly connected to the radiator/cooler (9), such that the heated cooling liquid is pumped directly to the radiator/cooler (9).

3. Cooling system according to Claim 1 or 2, **characterized in that** the existing vehicle cooler is used as the radiator/cooler (9).

4. Cooling system according to one of the preceding claims, **characterized in that** the retarder/integrated retarder (6) conducts a large volume flow via the radiator/cooler (9) only during retarder operation.

5. Cooling system according to one of the preceding claims, **characterized in that** the transmission (4) can dissipate heat to the cooling circuit (7) of the engine via a transmission heat exchanger (11).

6. Cooling system according to one of Claims 1 to 3, **characterized in that** the retarder (6) and the transmission (4) are cooled by means of the second, parallel cooling circuit (8), such that the cooling of the retarder and the cooling of the transmission are independent of the engine temperature.

7. Cooling system according to Claim 6, **characterized in that** the transmission dissipates transmission heat to the second circuit (8) via the transmission heat exchanger (11), with the transmission heat exchanger (11) being arranged at the inlet side of the retarder (6).

8. Cooling system according to Claim 6 or 7, **characterized in that** the retarder (6) is designed so as to generate, even in traction operation, a regulable volume flow in order to circulate the coolant of the second circuit (8).

9. Cooling system according to one of the preceding claims, **characterized in that** the engine (2) can, by means of the cooling water pump (13) provided in the cooling circuit (7), be operated independently of the cooling circuit (8) and at any desired engine temperatures, with the regulation of the engine temperature taking place by means of the thermostat (10) which is contained in the cooling circuit (7), which thermostat (10) connects the circuit (7) to the radiator/cooler (9) once the operating temperature is reached.

10. Cooling system according to one of Claims 1 to 8, **characterized in that** the engine (2) can, by means of the cooling water pump (13) provided in the cooling circuit (7), be operated independently of the cooling circuit (8) and at any desired engine temperatures, with the regulation of the engine temperature taking place by means of the cooling water pump (13), which is of regulable design.

11. Cooling system according to one of the preceding claims, **characterized in that** the radiator/cooler (9) is designed such that, at each retader/integrated retarder operating point, all incident braking power can be dissipated in order to prevent heating of the transmission (4) during retarder operation.

## Revendications

1. Système de refroidissement pour l'entraînement de véhicules comportant un ralentisseur, qui comprend deux circuits de refroidissement (7, 8) qui cèdent de la chaleur à un radiateur/refroidisseur (9) utilisé en commun, dans lequel le moteur (2) est refroidi par le premier circuit de refroidissement (7) et le ralentisseur (6) est refroidi par le second circuit de refroidissement parallèle (8) et le refroidissement du ralentisseur est indépendant de la température du moteur, **caractérisé en ce que** le ralentisseur (6) est conçu de telle manière qu'il serve de pompe pour le second circuit de refroidissement (8).

2. Système de refroidissement selon la revendication 1, **caractérisé en ce que** le ralentisseur (6) est conçu de telle manière que son fluide de travail soit le liquide de refroidissement (eau de refroidissement) du système de refroidissement (1), dans lequel le ralentisseur (6) est relié directement au radiateur/refroidisseur (9), de telle manière que le liquide de refroidissement échauffé soit pompé directement vers le radiateur/refroidisseur (9).

3. Système de refroidissement selon la revendication 1 ou 2, **caractérisé en ce que** l'on utilise comme radiateur/refroidisseur (9) le refroidisseur existant du véhicule.

4. Système de refroidissement selon l'une quelconque des revendications précédentes, **caractérisé en ce que** le ralentisseur/ralentisseur poids lourd (6) ne conduit un grand courant volumique à travers le radiateur/refroidisseur (9) que lorsqu'il fonctionne en ralentisseur.

5. Système de refroidissement selon l'une quelconque des revendications précédentes, **caractérisé en ce que** la boîte de vitesses (4) peut céder de la chaleur au circuit de refroidissement (7) du moteur au moyen d'un échangeur de chaleur (11) de la boîte de vitesses.

6. Système de refroidissement selon l'une quelconque des revendications 1 à 3, **caractérisé en ce que** le ralentisseur (6) et la boîte de vitesses (4) sont refroidis au moyen du second circuit de refroidissement parallèle (8), de telle façon que le refroidissement du ralentisseur et le refroidissement de la boîte de vitesses soient indépendants de la température du moteur.

7. Système de refroidissement selon la revendication 6, **caractérisé en ce que** la boîte de vitesses cède de la chaleur de la boîte de vitesses au second circuit de refroidissement (8) au moyen de l'échangeur de chaleur (11) de la boîte de vitesses, dans lequel l'échangeur de chaleur (11) de la boîte de vitesses est disposé sur le côté d'entrée du ralentisseur (6).

8. Système de refroidissement selon la revendication 6 ou 7, **caractérisé en ce que** le ralentisseur (6) est conçu de telle manière qu'il produise un courant volumique réglable, même en fonctionnement de traction, afin de faire circuler l'agent de refroidissement du second circuit de refroidissement (8).

9. Système de refroidissement selon l'une quelconque des revendications précédentes, **caractérisé en ce que** le moteur (2) peut fonctionner indépendamment du circuit de refroidissement (8) et à des températures de moteur quelconques au moyen de la pompe à eau de refroidissement (13) présente dans le circuit de refroidissement (7), dans lequel la régulation de la température du moteur est effectuée au moyen du thermostat (10) installé dans le circuit de refroidissement (7), qui relie le circuit (7) au radiateur/refroidisseur (9) dès que la température de fonctionnement est atteinte.

10. Système de refroidissement selon l'une quelconque des revendications 1 à 8, **caractérisé en ce que** le moteur (2) peut fonctionner indépendamment du circuit de refroidissement (8) et à des températures de moteur quelconques au moyen de la pompe à eau de refroidissement (13) présente dans le circuit de refroidissement (7), dans lequel la régulation de la température du moteur est effectuée au moyen de la pompe à eau de refroidissement (13), qui est réglable.

11. Système de refroidissement selon l'une quelconque des revendications précédentes, **caractérisé en ce que** le radiateur/refroidisseur (9) est conçu de telle manière que, pour chaque point de fonctionnement du ralentisseur/ralentisseur poids lourds, toutes les puissances de freinage dégagées puissent être évacuées, afin d'éviter un échauffement de la boîte de vitesses (4) pendant le fonctionnement du ralentisseur.
